# EUROPÄISCHE PATENTSCHRIFT

(11) **EP 3 476 698 B1**
(45) Veröffentlichungstag und Bekanntmachung des Hinweises auf die Patenterteilung: **27.01.2021**
(21) Anmeldenummer: 18211479.3
(22) Anmeldetag: 25.07.2014
(51) Int. Cl.: B62D 15/02, B60W 10/18, B60W 10/20, B60W 30/06

(54) **ENTSCHEIDEN ÜBER DIE FAHRTRICHTUNG BEIM WIEDERANFAHREN BEI EINEM AUTOMATISIERTEN PARKVORGANG MIT EINEM PARKASSISTENZSYSTEM**
DECISION-MAKING PROCESS REGARDING THE DRIVING DIRECTION WHEN RE-APPROACHING AN AUTOMATED PARKING PROCEDURE WITH A PARKING ASSISTANCE SYSTEM
DÉCISION CONCERNANT LA DIRECTION DU DÉPLACEMENT LORS DU DÉMARRAGE AU COURS D'UNE OPÉRATION DE STATIONNEMENT AUTOMATISÉE À L'AIDE D'UN SYSTÈME DE STATIONNEMENT

(30) Priorität: 29.07.2013 DE 102013214805
(43) Veröffentlichungstag der Anmeldung: 01.05.2019
(62) Teilanmeldung aus: 14742557.3
(73) Patentinhaber: Bayerische Motoren Werke Aktiengesellschaft, 80809 München (DE)
(72) Erfinder: Goldmann, Thomas, 95445 Bayreuth (DE); Burtsche, Thomas, 83627 Warngau (DE); Velten, Thomas, 81371 Sendling München (DE); Schillinger, Rainer, 80803 München (DE)

(56) Entgegenhaltungen:
- EP-A2- 0 849 144
- DE-A1-102007 002 265
- DE-A1-102011 086 210

## Beschreibung

Diese Patentanmeldung ist ein Teilanmeldung zur internationalen Anmeldung WO 2015/014765 A1. Patentanspruch 1 dieser Teilanmeldung basiert auf Patentanspruch 10 der genannten internationalen Anmeldung.

Die Erfindung betrifft das Wiederanfahren nach unvorhergesehenem Anhalten bei einem automatisierten Parkvorgang mittels eines Parkassistenzsystems mit automatisierter Längs- und Querführung.

Bei Parkassistenzsystemen mit automatisierter Querführung wird die Lenkung des Fahrzeugs während des Einparkvorgangs vom System gesteuert. Die Längsführung muss der Fahrer durch entsprechendes Beschleunigen und Bremsen selbst übernehmen. Bei Parkassistenzsystemen mit automatisierter Quer- und Längsführung wird auch die Aufgabe der Längsführung vom Parkassistenzsystem übernommen; die Längsbewegung des Kraftfahrzeugs wird vom Parkassistenzsystem gesteuert. Bei Parkassistenzsystem mit Quer- und Längsführung wird also die Lenkung, die Bremse und der Fahrzeugantrieb vom Parkassistenzsystem gesteuert. Bei derartigen Parkassistenzsystemen mit automatisierter Quer- und Längsführung hat der Fahrer im Allgemeinen die Möglichkeit, per Betätigung eines Bedienelements im Fahrzeugcockpit das Fahrzeug selbständig einparken und optional ausparken lassen zu können.

Ein beispielhaftes Parkassistenzsystem mit automatisierter Quer- und Längsführung ist in der Druckschrift "Parkassistent mit Längs- und Querführung", Dirk Ahrens, 5. Tagung Fahrerassistenz der TU München, München, 2012 beschrieben, die beispielsweise unter dem Link http:/www.ftm.mw.tum.de/uploads/media/21_Ahrens.pdf" im Internet abrufbar ist. In der manuellen Vorbeifahrt eines Fahrzeugs an parkenden Fahrzeugen wird mittels einer seitlichen Sensorik eine geeignete Längsparklücke gefunden und diese dem Fahrer in einem Display im Fahrzeug optisch angezeigt. Der Fahrer bestätigt dann die gefundene Parklücke. Wenn sich der Fahrer in einem gültigen Startkorridor neben dem vorderen Begrenzungsobjekt befindet, von dem es aus eine mögliche Fahrtrajektorie in eine gültige Parkendposition gibt, erfolgt eine Aktivierung des Parkmanövers durch Drücken und Halten einer Parktaste und anschließendem Lösen der Bremse. Nach Aktivierung des Parkmanövers parkt das Fahrzeug rückwärts mit selbstständiger Steuerung der Lenkung und selbstständiger Steuerung der Längsbewegung in einem oder mehreren Zügen in die Längsparklücke ein.

Zwischen zwei aufeinander folgenden Zügen der Einparktrajektorie liegt jeweils ein sogenannter Umkehrpunkt (auch als Umschaltpunkt bezeichnet), in dem die Fahrtrichtung von rückwärts auf vorwärts oder vorwärts auf rückwärts gewechselt wird. Hierzu kommt das Fahrzeug in dem jeweiligen Umkehrpunkt durch automatische Bremsbetätigung selbstständig in den Stillstand und führt nach Erreichen des Stillstands zum Ändern der Fahrtrichtung einen Gangwechsel im Automatikgetriebe durch.

Die Einparktrajektorie wird nach Vermessung der Parklücke geplant, daraus ergeben sich ein oder mehrere geplante Umkehrpunkte und eine geplante Parkendposition; es ist auch denkbar, dass in einem einzigen Zug die Parkendposition erreicht wird und kein Umkehrpunkt einplant wird. Idealerweise führt das Fahrzeug die Trajektorie wie geplant ab und hält an den geplanten Umschaltpunkten kurz an, um einen Gangwechsel durchzuführen.

Das Fahrzeug kann aber auch unvorhergesehen beim Abfahren der Einparktrajektorie zum Stehen kommen, beispielsweise bei Abbruch durch den Fahrer oder bei einem erhöhten Fahrwiderstand. Das Dokument DE102011086210 ist als nächstliegender Stand der Technik zu sehen und offenbart ein Verfahren zum Wiederanfahren eines Kraftfahrzeugs nach unvorhergesehenem Anhalten bei einem automatisierten rückwärtigen Einparkvorgang mittels eines Parkassistenzsystems mit automatisierter Längs- und Querführung, welches die Schritte umfasst:
- im Fall des Anhaltens des Fahrzeugs, Entscheiden über ein Wiederanfahren des Fahrzeugs in der bisherigen, vor Anhalten des Fahrzeugs vorherrschenden Fahrtrichtung
- in Abhängigkeit des Vorliegens eines etwaigen Hindernisses in der bisherigen Fahrtrichtung, - bei positiver Entscheidung aufgrund dem Nichtvorliegen eines etwaigen Hindernisses in der bisherigen Fahrtrichtung, Wiederanfahren des Fahrzeugs in der bisherigen Fahrtrichtung.

Es ist Aufgabe der Erfindung, das Wiederanfahren des Fahrzeugs nach einem derartigen unvorhergesehenen Stillstand zu verbessern.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Verfahren zum Wiederanfahren eines Kraftfahrzeugs nach unvorhergesehenem Anhalten bei einem automatisierten Parkvorgang, insbesondere bei einem rückwärtigen Einparkvorgang in eine Längsparklücke (parallel zur Straßenrichtung), mittels eines Parkassistenzsystems mit automatisierter Längs- und Querführung. Gemäß dem Verfahren wird im Fall des Anhaltens des Fahrzeugs über ein Wiederanfahren des Fahrzeugs in der bisherigen, vor Anhalten des Fahrzeugs vorherrschenden Fahrtrichtung entschieden. Die Entscheidung erfolgt gemäß einer bevorzugten Ausgestaltung der Erfindung in Abhängigkeit des verbleibenden Fahrwegs von der aktuellen Position bis zum nächsten in der bisherigen Fahrtrichtung liegenden geplanten Anhaltepunkt der Trajektorie. Bei einem Anhaltepunkt der Trajektorie kann es sich beispielsweise um einen Umkehrpunkt oder um die Parkendposition handeln. Bei positiver Entscheidung erfolgt ein Wiederanfahren des Fahrzeugs in der bisherigen Fahrtrichtung. Bei negativer Entscheidung erfolgt ein Wiederanfahren des Fahrzeugs entgegen der bisherigen Fahrtrichtung. Alternativ ist es auch denkbar, dass im Fall einer negativen Entscheidung kein Wiederanfahren des Fahrzeugs erfolgt und der Parkvorgang beendet wird.

Durch das erfindungsgemäße Verfahren kann verhindert werden, dass, wenn das Fahrzeug kurz vor einem geplanten Anhaltepunkt unvorhergesehen zum Stehen kommt, dann das Parkassistenzsystem das Fahrzeug für eine kurze Strecke anfährt, um dann im Fall eines Umkehrpunkts als Anhaltepunkt den Fahrtrichtungswechsel einzuleiten oder im Fall der Parkendposition als Anhaltepunkt die Endposition als erreicht auszugeben. Somit können aus Sicht des Fahrers nicht plausible Situationen mit kurzem Anfahren nach einem unvorhergesehenen Stillstand vermieden werden.

Alternativ oder zusätzlich kann auch in Abhängigkeit des Vorliegens eines etwaigen Hindernisses in der bisherigen Fahrtrichtung über ein Wiederanfahren des Fahrzeugs in der bisherigen Fahrtrichtung entschieden werden. Wenn beispielsweise die bisherige Fahrtrichtung durch ein Hindernis versperrt wird, dann führt das System selbstständig einen Fahrtrichtungswechsel durch und führt das Parkmanöver in der entgegengesetzten Fahrtrichtung fort.

Vorzugsweise wird die Entscheidung in Abhängigkeit des verbleibenden Fahrwegs von der aktuellen Position bis zum nächsten in der bisherigen Fahrtrichtung liegenden geplanten Umkehrpunkt der Trajektorie getroffen, wobei bei negativer Entscheidung das Fahrzeug entgegen der bisherigen Fahrtrichtung angefahren wird.

Im Fall des Anhaltens vor der Parkendposition wird die Entscheidung in Abhängigkeit des verbleibenden Fahrwegs von der aktuellen Position bis zur Parkendposition der Trajektorie getroffen (sofern auf der Trajektorie kein geplanter Umkehrpunkt zwischen der aktuellen Position und der Parkendposition liegt). Bei negativer Entscheidung wird das Fahrzeug nicht wiederangefahren und das Fahrzeug beendet den Parkvorgang.

Vorzugsweise wird zum Entscheiden über ein Wiederanfahren des Fahrzeugs in der bisherigen Fahrtrichtung ein Schwellwertvergleich des verbleibende Fahrweg von der aktuellen Position bis zum nächsten in der bisherigen Fahrtrichtung liegenden geplanten Anhaltepunkt der Trajektorie mit einem Schwellwert größer Null (beispielsweise 10 cm) durchgeführt.

Im Rahmen des Schwellwertvergleichs wird vorzugsweise geprüft, ob der verbleibende Fahrweg von der aktuellen Position bis zum nächsten in der bisherigen Fahrtrichtung liegenden geplanten Anhaltepunkt der Trajektorie kleiner oder kleiner gleich dem Schwellwert ist.

Für den Fall, dass der verbleibende Fahrweg kleiner bzw. kleiner gleich dem Schwellwert ist, fährt das Fahrzeug vorzugsweise entgegen der bisherigen Fahrtrichtung an (wenn das Fahrzeug kurz vor einem Umkehrpunkt anhält) oder das Fahrzeug fährt nicht wieder an und der Parkvorgang wird beendet (wenn das Fahrzeug kurz vor der Parkendposition anhält).

Der Schwellwert liegt vorzugsweise im Bereich von 30 cm bis 5 cm. Beispielsweise entspricht der Schwellwert ungefähr dem Wert 10 cm.

Gemäß einer weiteren Ausführungsform des Verfahrens wird das Verfahren bei einem rückwärtigen Einparkvorgang in eine Längsparklücke verwendet. Es wird im Rahmen des Verfahrens geprüft wird, ob das Fahrzeug einen bestimmten Punkt auf der Einparktrajektorie des ersten Einparkzugs in Rückwärtsrichtung erreicht oder überschritten hat. Im Fall des Vorliegens eines etwaigen Hindernisses in der bisherigen Fahrtrichtung wird ein Wiederanfahren des Fahrzeugs entgegen der bisherigen Fahrtrichtung durchgeführt, sofern der bestimmte Punkt auf der Einparktrajektorie erreicht bzw. überschritten wurde. Der Punkt auf der Einparktrajektorie des ersten Einparkzugs entspricht vorzugsweise dem Punkt, ab dem oder nach dem bei einem Wiederanfahren entgegen der bisherigen Fahrtrichtung eine akzeptable Parkendposition erreicht werden kann.

Ein zweiter Aspekt der Erfindung betrifft ein Parkassistenzsystem mit automatisierter Längs- und Querführung. Das Parkassistenzsystem ist eingerichtet, bei unvorhergesehenem Anhalten während eines automatisierten Parkvorgangs über ein Wiederanfahren des Fahrzeugs in der bisherigen, vor Anhalten des Fahrzeugs vorherrschenden Fahrtrichtung zu entscheiden. Die Entscheidung erfolgt vorzugsweise in Abhängigkeit des verbleibenden Fahrwegs von der aktuellen Position bis zum nächsten in der bisherigen Fahrtrichtung liegenden geplanten Anhaltepunkt der Trajektorie. Die Entscheidung kann alternativ oder zusätzlich in Abhängigkeit des Vorliegens eines etwaigen Hindernisses in der bisherigen Fahrtrichtung getroffen werden. Bei positiver Entscheidung wird seitens des Systems ein Wiederanfahren des Fahrzeugs in der bisherigen Fahrtrichtung veranlasst. Bei negativer Entscheidung wird ein Wiederanfahren des Fahrzeugs entgegen der bisherigen Fahrtrichtung veranlasst oder es wird kein Wiederanfahren veranlasst (in keiner der beiden Fahrtrichtungen) und der Parkvorgang wird beendet.

Die vorstehenden Ausführungen zum erfindungsgemäßen Verfahren nach dem ersten Aspekt der Erfindung gelten in entsprechender Weise auch für das erfindungsgemäße Parkassistenzsystem nach dem zweiten Aspekt der Erfindung. An dieser Stelle nicht explizit beschriebene vorteilhafte Ausführungsbeispiele des erfindungsgemäßen Systems entsprechen den beschriebenen vorteilhaften Ausführungsbeispielen des erfindungsgemäßen Verfahrens.

Ein weiterer Gedanke der Erfindung ist ein Verfahren zum Wiederanfahren eines Kraftfahrzeugs nach unvorhergesehenem Anhalten bei einem automatisierten Parkvorgang, insbesondere Einparkvorgang, mittels eines Parkassistenzsystems mit automatisierter Längs- und Querführung, welches die Schritte umfasst:
- im Fall des Anhaltens des Fahrzeugs, Entscheiden über ein Wiederanfahren des Fahrzeugs in der bisherigen, vor Anhalten des Fahrzeugs vorherrschenden Fahrtrichtung
   - in Abhängigkeit des verbleibenden Fahrwegs von der aktuellen Position bis zum nächsten in der bisherigen Fahrtrichtung liegenden geplanten Anhaltepunkt der Trajektorie und/oder
   - in Abhängigkeit des Vorliegens eines etwaigen Hindernisses in der bisherigen Fahrtrichtung,
- bei positiver Entscheidung, Wiederanfahren des Fahrzeugs in der bisherigen Fahrtrichtung und
- bei negativer Entscheidung,
   - Wiederanfahren des Fahrzeugs entgegen der bisherigen Fahrtrichtung oder
   - kein Wiederanfahren des Fahrzeugs und Beenden des Parkvorgangs.

In diesem Fall ist es von Vorteil, über ein Wiederanfahren des Fahrzeugs in der bisherigen, vor Anhalten des Fahrzeugs vorherrschenden Fahrtrichtung in Abhängigkeit des verbleibenden Fahrwegs von der aktuellen Position bis zum nächsten in der bisherigen Fahrtrichtung liegenden geplanten Anhaltepunkt der Trajektorie zu entschieden.

In diesem Fall ist es von Vorteil, die Entscheidung in Abhängigkeit des verbleibenden Fahrwegs von der aktuellen Position bis zum nächsten in der bisherigen Fahrtrichtung liegenden geplanten Umkehrpunkt der Trajektorie zu treffen, und bei negativer Entscheidung das Fahrzeug entgegen der bisherigen Fahrtrichtung anzufahren.

Insbesondere wird die Entscheidung in Abhängigkeit des verbleibenden Fahrwegs von der aktuellen Position bis zur Parkendposition der Trajektorie getroffen, sofern auf der Trajektorie kein geplanter Umkehrpunkt zwischen der aktuellen Position und der Parkendposition liegt, und bei negativer Entscheidung wird das Fahrzeug nicht wiederangefahren und das Fahrzeug beendet den Parkvorgang.

Insbesondere wird zum Entscheiden über ein Wiederanfahren des Fahrzeugs in der bisherigen, vor Anhalten des Fahrzeugs vorherrschenden Fahrtrichtung ein Schwellwertvergleich des verbleibende Fahrweg von der aktuellen Position bis zum nächsten in der bisherigen Fahrtrichtung liegenden geplanten Anhaltepunkt der Trajektorie mit einem Schwellwert größer null durchgeführt.

In diesem Fall ist es von Vorteil, im Rahmen des Schwellwertvergleichs zu prüfen, ob der verbleibende Fahrweg von der aktuellen Position bis zum nächsten in der bisherigen Fahrtrichtung liegenden geplanten Anhaltepunkt der Trajektorie kleiner oder kleiner gleich dem Schwellwert ist.

In diesem Fall ist es von Vorteil, für den Fall, dass der verbleibende Fahrweg kleiner bzw. kleiner gleich dem Schwellwert ist, das Fahrzeug entgegen der bisherigen Fahrtrichtung anzufahren oder das Fahrzeug nicht wiederanzufahren und den Parkvorgang zu beenden.

Insbesondere ist der Schwellwert ein Wert im Bereich von 30 cm bis 5 cm, beispielsweise entspricht der Schwellwert ungefähr dem Wert 10 cm.

Insbesondere ist der Parkvorgang ein rückwärtiger Einparkvorgang, im Rahmen des Verfahrens wird geprüft, ob das Fahrzeug einen bestimmten Punkt auf der Einparktrajektorie des ersten Einparkzugs in Rückwärtsrichtung erreicht oder überschritten hat und bei Vorliegen eines etwaigen Hindernisses in der bisherigen Fahrtrichtung wird ein Wiederanfahren des Fahrzeugs entgegen der bisherigen Fahrtrichtung durchgeführt, sofern dieser bestimmte Punkt auf der Einparktrajektorie erreicht bzw. überschritten wurde.

In diesem Fall ist es von Vorteil, wenn der Punkt auf der Einparktrajektorie einem Punkt entspricht, ab dem oder nach dem bei einem Wiederanfahren entgegen der bisherigen Fahrtrichtung eine akzeptable Parkendposition erreicht werden kann.

Ein weiterer Gedanke der Erfindung ist ein Parkassistenzsystem mit automatisierter Längs- und Querführung für ein Kraftfahrzeug, wobei das Parkassistenzsystem eingerichtet ist,
- bei unvorhergesehenem Anhalten während eines automatisierten Parkvorgangs über ein Wiederanfahren des Fahrzeugs in der bisherigen, vor Anhalten des Fahrzeugs vorherrschenden Fahrtrichtung
   - in Abhängigkeit des verbleibenden Fahrwegs von der aktuellen Position bis zum nächsten in der bisherigen Fahrtrichtung liegenden geplanten Anhaltepunkt der Trajektorie und/oder
   - in Abhängigkeit des Vorliegens eines etwaigen Hindernisses in der bisherigen Fahrtrichtung,
   zu entscheiden,
- bei positiver Entscheidung ein Wiederanfahren des Fahrzeugs in der bisherigen Fahrtrichtung zu veranlassen und
- bei negativer Entscheidung,
   - ein Wiederanfahren des Fahrzeugs entgegen der bisherigen Fahrtrichtung zu verlassen oder
   - kein Wiederanfahren des Fahrzeugs zu veranlassen und den Parkvorgang zu beenden.

Ein weiterer Gedanke der Erfindung ist ein Kraftfahrzeug umfassend ein genanntes Parkassistenzsystem.

Die Erfindung wird nachfolgend unter Zuhilfenahme auf die beigefügte Zeichnung anhand eines Ausführungsbeispiels beschrieben.

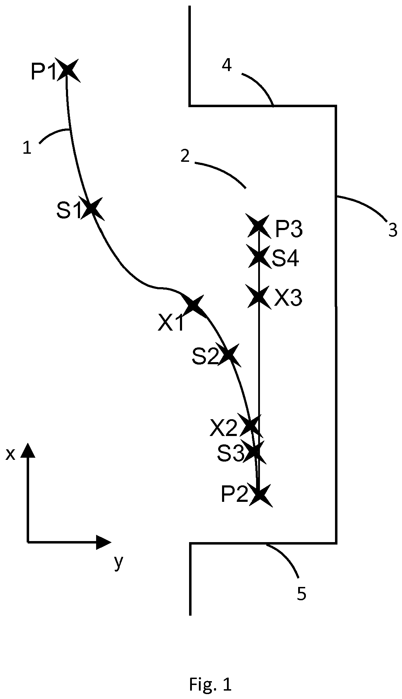

Fig. 1 zeigt einen schematischen Verlauf einer beispielhaften Einparktrajektorie 1 für ein rückwärtiges Einparkmanöver in eine Längsparklücke 2 in der Draufsicht. Die Längsparklücke 2 wird in y-Richtung durch eine seitliche Begrenzungslinie 3 begrenzt, beispielsweise durch einen Bordstein. In x-Richtung wird die Längsparklücke 2 durch eine vordere Begrenzungslinie 4 und durch eine hintere Begrenzungslinie 5 begrenzt. Die vordere Begrenzungslinie 4 markiert beispielsweise das Heck eines vorderen Fahrzeugs und die hintere Begrenzungslinie 5 markiert beispielsweise die Front eines hinteren Fahrzeugs.

Im Fall von Fig. 1 ist der Bezugspunkt des Fahrzeugs für die Einparktrajektorie beispielsweise die Mitte der Hinterachse des Fahrzeugs. Das Einparkmanöver umfasst beispielsweise zwei Züge: einen ersten Einparkzug in Rückwärtsrichtung vom Anfangspunkt P1 der Einparktrajektorie 1 bis zum Umkehrpunkt P2 und einen zweiten Einparkzug in Vorwärtsrichtung vom Umkehrpunkt P2 bis zur Parkendposition P3.

Nach der Vermessung der Längsparklücke 2 wird die Einparktrajektorie 1 geplant; daraus ergeben sich ein oder mehrere geplante Umkehrpunkte P2 und eine geplante Parkendposition P3. Idealerweise fährt das Fahrzeug die Einparktrajektorie wie geplant ab und hält an den geplanten Umkehrpunkten P2 an. Wenn das Fahrzeug kurz vor einem geplanten Umkehrpunkt unvorhergesehen zum Stehen kommt (z.B. aufgrund eines Abbruchs durch den Fahrer oder durch einen hohen Fahrwiderstand), dann soll ein kurzes Anfahren für eine kurze Strecke in der bisherigen Fahrtrichtung vermieden werden.

Hierzu wird die Einparktrajektorie 1 in drei Bereiche unterteilt:
1. Bereich der Annäherung an die Parklücke 2 und des Einschwenkens in die Parklücke 2 innerhalb des ersten Einparkzugs (Bereich ab dem Anfangspunkt P1 bis zum Punkt X1, ohne den Punkt X1 selbst):
   Wenn in diesem 1. Bereich eine Unterbrechung des Parkvorganges stattfindet (beispielsweise ein Fahrzeug-Stopp an der Position S1), dann wird das Einparkmanöver nach dem Wiederanfahren in der bisherigen Fahrtrichtung fortgesetzt. Sollte dies nicht möglich sein, z.B. weil aufgrund der Ultraschallsensorik ein Hindernis im Fahrschlauch der bisherigen Fahrtrichtung erkannt wird, wird der Parkvorgang abgebrochen.
2. Bereich innerhalb Parklücke 2, in der ein vorgezogener Richtungswechsel das Erreichen einer zwar neu zu planenden aber akzeptablen Parkendposition ermöglicht (Bereich ab dem Punkt X1):
   Wenn in diesem 2. Bereich und außerhalb der Teilbereiche unter 3. eine Unterbrechung des Parkvorgangs mit Anhalten des Fahrzeugs stattfindet, dann wird das Parkmanöver nach Möglichkeit in der bisherigen Fahrtrichtung fortgesetzt.
   Wenn in diesem 2. Bereich eine Unterbrechung des Parkvorganges stattfindet (beispielsweise an der Position S2) und die bisherige Fahrtrichtung durch ein mittels der Ultraschallsensorik erkanntes Hindernis im Fahrschlauch versperrt wird, dann führt das System selbsttätig einen Fahrtrichtungswechsel durch und setzt das Parkmanöver in der entgegengesetzten Fahrtrichtung fort.
   Der Punkt X1 auf der Einparktrajektorie 2 des ersten Einparkzugs entspricht vorzugsweise dem Punkt, ab dem bei einem Wiederanfahren entgegen der bisherigen Fahrtrichtung eine akzeptable Parkendposition erreicht werden kann. Der Punkt X1 ist beispielsweise so definiert, dass dieser dem frühesten Punkt auf der Einparktrajektorie entspricht, ab dem sich das gesamte Fahrzeug in x-Richtung auf Höhe der Parklücke 2 befindet und gleichzeitig der Abstand zum Bordstein 3 eine bestimmte Schwellwert (beispielsweise 50 cm) nicht überschreitet. Das gesamte Fahrzeug befindet sich in x-Richtung auf Höhe der Parklücke 2, wenn sich das Fahrzeug in x-Richtung unterhalb der vorderen Begrenzungslinie 4 und oberhalb der hinteren Begrenzungslinie 5 befindet. Die rechte vordere Ecke des Fahrzeugs befindet sich dann beispielsweise unterhalb der vorderen Begrenzungslinie 4.
   Ab diesem Punkt X1 kann trotz eines vorgezogenen Richtungswechsels eine akzeptable Parkendposition erreicht werden. Diese kennzeichnet sich beispielsweise dadurch, dass in der Parkendposition der Winkel zwischen der Längsrichtung des Fahrzeugs und der seitlichen Begrenzungslinie 3 kleiner als ein bestimmter Schwellwert (z. B. 1°) ist und der Abstand zu der seitlichen Begrenzungslinie 3 in einem bestimmten Bereich liegt (z. B. größer 0 cm und kleiner 40 cm).
   Ab dem Punkt X1 sind also ein vorgezogener Richtungswechsel grundsätzlich möglich.
3. Teilbereiche innerhalb des 2. Bereichs kurz vor dem geplanten Umkehrpunkt P2 (Bereich zwischen dem Punkt X2 und dem Umkehrpunkt P2) bzw. kurz vor der geplanten Parkendposition P3 (Bereich zwischen X3 und P3):
   Wenn in diesen Teilbereichen des 2. Bereichs eine unvorhergesehene Unterbrechung des Parkvorganges stattfindet und das Fahrzeug anhält (z. B. an den Punkten S3 oder S4), dann wird das Manöver in der entgegengesetzten Fahrtrichtung fortgesetzt (beispielsweise im Fall des Anhaltens an Punkt S3 kurz vor dem Umkehrpunkt P2) bzw. vorzeitig die Endposition erreicht (beispielsweise im Fall des Anhaltens an Punkt S4 kurz vor der geplanten Parkendposition P3). Der Grund hierfür ist, dass andernfalls bei einem Anfahren in der bisherigen Fahrtrichtung nach kurzer Strecke (beispielsweise wenigen cm) wieder angehalten werden müsste; dies ist für den Fahrer nicht plausibel. Die Teilbereiche beginnen beispielsweise ab einem Restfahrweg von 10 cm bis zu dem geplanten Umkehrpunkt P2 bzw. bis zu der geplanten Parkendposition P3. Die beiden Punkte X2 und X3 liegen also jeweils eine feste Wegstrecke vor dem geplanten Punkt P2 bzw. P3 (z. B. 10 cm vorher).

Vorstehend wurde ein Verfahren beschrieben, bei dem für den Fall, dass das Fahrzeug während des Einparkmanövers zum Stehen kommt, vor der Weiterfahrt anhand des verbleibenden geplanten Weges zum nächsten Anhaltepunkt und/oder dem Vorliegen eines Hindernisses in der ursprünglichen Richtung entschieden wird, ob eine Weiterfahrt in der ursprünglich geplanten Richtung sinnvoll ist. Falls diese Prüfung positiv verläuft, dann wird in der vorherigen Richtung angefahren, andernfalls wird vor dem Anfahren ein Fahrtrichtungswechsel eingeleitet, sofern dies zum Erreichen einer akzeptablen Endposition möglich ist.

## Patentansprüche

1. Verfahren zum Wiederanfahren eines Kraftfahrzeugs nach unvorhergesehenem Anhalten bei einem automatisierten rückwärtigen Einparkvorgang mittels eines Parkassistenzsystems mit automatisierter Längs- und Querführung, welches die Schritte umfasst:
- im Fall des Anhaltens des Fahrzeugs, Entscheiden über ein Wiederanfahren des Fahrzeugs in der bisherigen, vor Anhalten des Fahrzeugs vorherrschenden Fahrtrichtung
- in Abhängigkeit des Vorliegens eines etwaigen Hindernisses in der bisherigen Fahrtrichtung,
- bei positiver Entscheidung aufgrund dem Nichtvorliegen eines etwaigen Hindernisses in der bisherigen Fahrtrichtung, Wiederanfahren des Fahrzeugs in der bisherigen Fahrtrichtung und
- bei negativer Entscheidung aufgrund dem Vorliegen eines etwaigen Hindernisses in der bisherigen Fahrtrichtung,
- Wiederanfahren des Fahrzeugs entgegen der bisherigen Fahrtrichtung, sofern ein bestimmter Punkt (X1) auf der Einparktrajektorie (1) erreicht bzw. überschritten wurde, wobei der Punkt (X1) auf der Einparktrajektorie (1) einem Punkt entspricht, ab dem oder nach dem bei einem Wiederanfahren entgegen der bisherigen Fahrtrichtung eine akzeptable Parkendposition erreicht werden kann, und wobei im Rahmen des Verfahrens geprüft wird, ob das Fahrzeug den bestimmten Punkt (X1) auf der Einparktrajektorie (1) des ersten Einparkzugs in Rückwärtsrichtung erreicht oder überschritten hat, oder
- kein Wiederanfahren des Fahrzeugs und Beenden des Parkvorgangs, sofern der bestimmte Punkt (X1) auf der Einparktrajektorie (1) nicht erreicht bzw. nicht überschritten wurde.

2. Verfahren nach Anspruch 1, wobei über ein Wiederanfahren des Fahrzeugs in der bisherigen, vor Anhalten des Fahrzeugs vorherrschenden Fahrtrichtung in Abhängigkeit des verbleibenden Fahrwegs von der aktuellen Position (S3, S4) bis zum nächsten in der bisherigen Fahrtrichtung liegenden geplanten Anhaltepunkt (P2, P3) der Trajektorie entschieden wird.

3. Verfahren nach Anspruch 2, wobei
- die Entscheidung in Abhängigkeit des verbleibenden Fahrwegs von der aktuellen Position (S3) bis zum nächsten in der bisherigen Fahrtrichtung liegenden geplanten Umkehrpunkt (P2) der Trajektorie (1) getroffen wird, und
- bei negativer Entscheidung das Fahrzeug entgegen der bisherigen Fahrtrichtung angefahren wird.

4. Verfahren nach einem der Ansprüche 2 bis 3, wobei
- die Entscheidung in Abhängigkeit des verbleibenden Fahrwegs von der aktuellen Position (S4) bis zur Parkendposition (P3) der Trajektorie (1) getroffen wird, sofern auf der Trajektorie (1) kein geplanter Umkehrpunkt zwischen der aktuellen Position (S4) und der Parkendposition (P3) liegt, und
- bei negativer Entscheidung das Fahrzeug nicht wiederangefahren wird und das Fahrzeug den Parkvorgang beendet.

5. Verfahren nach einem der Ansprüche 2 bis 4, wobei zum Entscheiden über ein Wiederanfahren des Fahrzeugs in der bisherigen, vor Anhalten des Fahrzeugs vorherrschenden Fahrtrichtung ein Schwellwertvergleich des verbleibende Fahrweg von der aktuellen Position (S3, S4) bis zum nächsten in der bisherigen Fahrtrichtung liegenden geplanten Anhaltepunkt (P2, P3) der Trajektorie (1) mit einem Schwellwert größer null durchgeführt wird.

6. Verfahren nach Anspruch 5, wobei im Rahmen des Schwellwertvergleich geprüft wird, ob der verbleibende Fahrweg von der aktuellen Position (S3, S4) bis zum nächsten in der bisherigen Fahrtrichtung liegenden geplanten Anhaltepunkt (P2, P3) der Trajektorie (1) kleiner oder kleiner gleich dem Schwellwert ist.

7. Verfahren nach Anspruch 6, wobei
für den Fall, dass der verbleibende Fahrweg kleiner bzw. kleiner gleich dem Schwellwert ist, das Fahrzeug entgegen der bisherigen Fahrtrichtung anfährt oder das Fahrzeug nicht wiederanfährt und der Parkvorgang beendet wird.

8. Verfahren nach einem der Ansprüche 5 bis 7, wobei der Schwellwert ein Wert im Bereich von 30 cm bis 5 cm ist, insbesondere der Schwellwert ungefähr dem Wert 10 cm entspricht.

9. Parkassistenzsystem mit automatisierter Längs- und Querführung für ein Kraftfahrzeug, wobei das Parkassistenzsystem eingerichtet ist,
- bei unvorhergesehenem Anhalten während eines automatisierten rückwärtigen Einparkvorgang über ein Wiederanfahren des Fahrzeugs in der bisherigen, vor Anhalten des Fahrzeugs vorherrschenden Fahrtrichtung
- in Abhängigkeit des Vorliegens eines etwaigen Hindernisses in der bisherigen Fahrtrichtung,
zu entscheiden,
- bei positiver Entscheidung aufgrund dem Nichtvorliegen eines etwaigen Hindernisses in der bisherigen Fahrtrichtung ein Wiederanfahren des Fahrzeugs in der bisherigen Fahrtrichtung zu veranlassen und
- bei negativer Entscheidung aufgrund dem Vorliegen eines etwaigen Hindernisses in der bisherigen Fahrtrichtung,
- ein Wiederanfahren des Fahrzeugs entgegen der bisherigen Fahrtrichtung zu veranlassen, sofern ein bestimmter Punkt (X1) auf der Einparktrajektorie (1) erreicht bzw. überschritten wurde, wobei der Punkt (X1) auf der Einparktrajektorie (1) einem Punkt entspricht, ab dem oder nach dem bei einem Wiederanfahren entgegen der bisherigen Fahrtrichtung eine akzeptable Parkendposition erreicht werden kann, und wobei das Parkassistenzsystem eingerichtet ist zu prüfen, ob das Fahrzeug den bestimmten Punkt (X1) auf der Einparktrajektorie (1) des ersten Einparkzugs in Rückwärtsrichtung erreicht oder überschritten hat, oder
- kein Wiederanfahren des Fahrzeugs zu veranlassen und den Parkvorgang zu beenden, sofern der bestimmte Punkt (X1) auf der Einparktrajektorie (1) nicht erreicht bzw. nicht überschritten wurde.

10. Kraftfahrzeug umfassend ein Parkassistenzsystem nach Anspruch 9.

## Claims

1. Method for resuming the movement of a motor vehicle after unforeseen stopping in an automated parking-space-entering process in reverse by means of a parking assistance system having an automated longitudinal and transverse guidance, which method comprises the steps:
- in the event of the vehicle stopping, deciding about a resumption of movement of the vehicle in the previous direction of travel which existed before the vehicle was stopped
- as a function of the presence of any obstacle in the previous direction of travel,
- in the event of a positive decision owing to the absence of any obstacle in the previous direction of travel, the movement of the vehicle is resumed in the previous direction of travel,
and
- in the event of a negative decision owing to the presence of any obstacle in the previous direction of travel,
- the movement of the vehicle is resumed counter to the previous direction of travel insofar as a specific point (X1) on the parking-space-entering trajectory (1) has been reached or passed, wherein the point (X1) on the parking-space-entering trajectory (1) corresponds to a point starting from or after, and wherein it is checked within the scope of the method whether the vehicle has reached or passed the specific point (X1) on the parking-space-entering trajectory (1) of the first parking movement in the reverse direction, or
- the movement of the vehicle is not resumed and the parking process is ended insofar as the specific point (X1) on the parking-space-entering trajectory (1) has not been reached or has not been passed.

2. Method according to Claim 1, wherein a decision about a resumption of movement of the vehicle in the previous direction of travel which existed before the vehicle was stopped is made as a function of the remaining route from the current position (S3, S4) up to the next planned stopping point (P2, P3), in the previous direction of travel, of the trajectory.

3. Method according to Claim 2, wherein
- the decision is made as a function of the remaining route from the current position (S3) up to the next planned reversal point (P2), in the previous direction of travel, of the trajectory (1), and
- in the event of a negative decision, the movement of the vehicle is started counter to the previous direction of travel.

4. Method according to one of Claims 2 to 3, wherein
- the decision is made as a function of the remaining route from the current position (S4) up to the next parked position (P3) of the trajectory (1) if there is no planned reversal point between the current position (S4) and the final parked position (P3) on the trajectory (1), and
- in the event of a negative decision the movement of the vehicle is not resumed and the vehicle ends the parking process.

5. Method according to one of Claims 2 to 4, wherein in order to make a decision about a resumption of movement of the vehicle in the previous direction of travel which existed before the vehicle was stopped, a threshold value comparison of the remaining route from the current position (S3, S4) up to the next planned stopping point (P2, P3), in the previous direction of travel, of the trajectory (1) is made with a threshold value which is greater than zero.

6. Method according to Claim 5, wherein within the scope of the threshold value comparison it is checked whether the remaining route from the current position (S3, S4) up to the next planned stopping point (P2, P3), in the previous direction of travel, of the trajectory (1) is less than or less than or equal to the threshold value.

7. Method according to Claim 6, wherein
in the event of the remaining route being less than or less than or equal to the threshold value, the movement of the vehicle counter to the previous direction of travel is started, or the movement of the vehicle is not resumed and the parking process is ended.

8. Method according to one of Claims 5 to 7, wherein the threshold value is a value in the range from 30 cm to 5 cm, in particular the threshold value corresponds approximately to the value of 10 cm.

9. Parking assistance system having automated longitudinal and transverse guidance for a motor vehicle, wherein the parking assistance system is configured to make a decision
- in the event of unforeseen stoppage during an automated parking-space-entering process in reverse about resumption of the movement of the vehicle in the previous direction of travel which existed before the vehicle was stopped,
- as a function of the presence of any obstacle in the previous direction of travel,
- to bring about resumption of the movement of the vehicle in the previous direction of travel in the event of a positive decision owing to the absence of any obstacle in the previous direction of travel, and
- in the event of a negative decision owing to the presence of any obstacle in the previous direction of travel,
- to bring about resumption of movement of the vehicle counter to the previous direction of travel insofar as a specific point (X1) on the parking-space-entering trajectory (1) has been reached or passed, wherein the point (X1) on the parking-space-entering trajectory (1) corresponds to a point starting from or after which an acceptable final parked position can be reached in the event of the movement of the vehicle being resumed counter to the previous direction of travel, and wherein the parking assistance system is configured to check whether the vehicle has reached or passed the specific point (X1) on the parking-space-entering trajectory (1) of the first parking movement in the reverse direction, or
- not to bring about resumption of movement of the vehicle and to end the parking process insofar as the specific point (X1) on the parking-space-entering trajectory (1) has not been reached or has not been passed.

10. Motor vehicle comprising a parking assistance system according to Claim 9.

## Revendications

1. Procédé permettant de faire redémarrer un véhicule automobile après un arrêt imprévu lors d'une opération de stationnement en marche arrière automatisée au moyen d'un système d'aide au stationnement à guidage longitudinal et transversal automatisé, comprenant les étapes consistant à :
- en cas d'arrêt du véhicule, décider d'un redémarrage du véhicule dans le sens de la marche précédent, effectif avant l'arrêt du véhicule,
- en fonction de la présence d'un obstacle éventuel dans le sens de la marche précédent,
- en cas de décision positive en raison de l'absence d'un obstacle éventuel dans le sens de la marche précédent, redémarrer le véhicule dans le sens de la marche précédent, et
- en cas de décision négative en raison de la présence d'un obstacle éventuel dans le sens de la marche précédent,
- redémarrer le véhicule à l'opposé du sens de la marche précédent, dans la mesure où un point déterminé (X1) sur la trajectoire de stationnement (1) a été atteint ou dépassé, le point (X1) sur la trajectoire de stationnement (1) correspondant à un point à partir duquel ou après lequel une position de fin de stationnement acceptable peut être atteinte lors d'un redémarrage à l'opposé du sens de la marche précédent, et dans lequel il est vérifié dans le cadre du procédé si le véhicule a atteint ou dépassé le point déterminé (X1) sur la trajectoire de stationnement (1) du premier tour de stationnement en marche arrière, ou
- ne pas redémarrer le véhicule et terminer l'opération de stationnement dans la mesure où le point déterminé (X1) sur la trajectoire de stationnement (1) n'a pas été atteint ou dépassé.

2. Procédé selon la revendication 1, dans lequel il est décidé d'un redémarrage du véhicule dans le sens de la marche précédent, effectif avant l'arrêt du véhicule, en fonction du trajet restant entre la position actuelle (S3, S4) et le point d'arrêt (P2, P3) prévu suivant de la trajectoire, situé dans le sens de la marche précédent.

3. Procédé selon la revendication 2, dans lequel
- la décision est prise en fonction du trajet restant entre la position actuelle (S3) et le point d'inversion (P2) prévu de la trajectoire (1), situé dans le sens de la marche précédent, et
- en cas de décision négative, le véhicule est démarré à l'opposé du sens de la marche précédent.

4. Procédé selon l'une quelconque des revendications 2 à 3, dans lequel
- la décision est prise en fonction du trajet restant entre la position actuelle (S4) et la position de fin de stationnement (P3) de la trajectoire (1) dans la mesure où aucun point d'inversion prévu ne se trouve sur la trajectoire entre la position actuelle (S4) et la position de fin de stationnement (P3), et
- en cas de décision négative, le véhicule n'est pas redémarré et le véhicule termine l'opération de stationnement.

5. Procédé selon l'une quelconque des revendications 2 à 4, dans lequel, pour décider d'un redémarrage du véhicule dans le sens de la marche précédent, effectif avant l'arrêt du véhicule, une comparaison de valeur seuil du trajet restant entre la position actuelle (S3, S4) et le point d'arrêt (P2, P3) prévu suivant de la trajectoire (1), situé dans le sens de la marche précédent, avec une valeur seuil supérieure à zéro est effectuée.

6. Procédé selon la revendication 5, dans lequel, dans le cadre de la comparaison de valeur seuil, il est vérifié si le trajet restant entre la position actuelle (S3, S4) et le point d'arrêt (P2, P3) prévu suivant de la trajectoire (1), situé dans le sens de la marche précédent, est inférieur ou égal à la valeur seuil.

7. Procédé selon la revendication 6, dans lequel, au cas où le trajet restant serait inférieur ou égal à la valeur seuil, le véhicule démarre à l'opposé du sens de la marche précédent ou le véhicule ne redémarre pas et termine l'opération de stationnement.

8. Procédé selon l'une quelconque des revendications 5 à 7, dans lequel la valeur seuil est une valeur comprise dans la plage entre 30 cm et 5 cm, en particulier la valeur seuil correspond approximativement à la valeur de 10 cm.

9. Système d'aide au stationnement à guidage longitudinal et transversal automatisé pour un véhicule automobile, le système d'aide au stationnement étant aménagé pour
- en cas d'arrêt imprévu pendant une opération de stationnement en marche arrière automatisée, décider d'un redémarrage du véhicule dans le sens de la marche précédent, effectif avant l'arrêt du véhicule,
- en fonction de la présence d'un obstacle éventuel dans le sens de la marche précédent,
- en cas de décision positive en raison de l'absence d'un obstacle éventuel dans le sens de la marche précédent, provoquer un redémarrage du véhicule dans le sens de la marche précédent, et
- en cas de décision négative en raison de la présence d'un obstacle éventuel dans le sens de la marche précédent,
- provoquer un redémarrage du véhicule à l'opposé du sens de la marche précédent, dans la mesure où un point déterminé (X1) sur la trajectoire de stationnement (1) a été atteint ou dépassé, le point (X1) sur la trajectoire de stationnement (1) correspondant à un point à partir duquel ou après lequel une position de fin de stationnement acceptable peut être atteinte lors d'un redémarrage à l'opposé du sens de la marche précédent, et dans lequel le système d'aide au stationnement est aménagé pour vérifier si le véhicule a atteint ou dépassé le point déterminé (X1) sur la trajectoire de stationnement (1) du premier tour de stationnement en marche arrière, ou
- ne pas provoquer de redémarrage du véhicule et terminer l'opération de stationnement dans la mesure où le point déterminé (X1) sur la trajectoire de stationnement (1) n'a pas été atteint ou dépassé.

10. Véhicule automobile, comprenant un système d'aide au stationnement selon la revendication 9.
